# DEMANDE DE BREVET EUROPEEN

(11) **EP 4 382 480 A1**
(43) Date de publication de la demande: **12.06.2024**
(21) Numéro de dépôt: 22211529.7
(22) Date de dépôt: 05.12.2022
(51) Int. Cl.: C01B 25/08, B23B 27/00, F41H 5/00, C09K 3/14

(54) **PROCÉDÉ DE PRODUCTION DE SOUS-PHOSPHURE DE BORE B12P2**

(71) Demandeur: Universite Sorbonne Paris Nord, 93430 Villetaneuse (FR); Centre national de la recherche scientifique, 75016 Paris (FR); SORBONNE UNIVERSITE, 75006 Paris (FR)
(72) Inventeur: VREL, Dominique, 95620 PARMAIN (FR); DINE, Sarah, 93430 Villetaneuse (FR); LE GODEC, Yann, 75013 PARIS (FR); MOUTAABBID, Hicham, 92330 Sceaux (FR)
(74) Mandataire: Demulsant, Xavier

(57) **Abrégé**

Procédé de production de sous phosphure de bore B₁₂P₂ par synthèse auto-propagée, le procédé comprenant une étape de mélange de réactifs, sous forme de poudres, suivi d'une étape d'amorçage d'une réaction exothermique, la réaction exothermique étant effectuée dans une enceinte fermée.

## Description

### DOMAINE DE L'INVENTION

L'invention a trait à la production de sous phosphure de bore B₁₂P₂, qui présente des propriétés mécaniques, thermiques et électroniques intéressantes.

Le sous phosphure de bore B₁₂P₂ présente notamment des valeurs de dureté élevées, des masses volumiques faibles, une grande résistance à la compression, et a en outre une température de fusion très élevée, de l'ordre de 2400 K.

### ETAT DE LA TECHNIQUE

Le sous phosphure de bore B₁₂P₂ est souvent vu comme une impureté dans les procédés qui visent essentiellement à réaliser du phosphure de bore BP.

Néanmoins, divers procédés ont été proposés, dans l'art antérieur, pour la synthèse de sous phosphure de bore B₁₂P₂.

Selon un premier type de synthèse, le sous phosphure de bore est déposé sur un substrat, par exemple en silicium ou en carbure de silicium. Le document US2004005768 (Hersee, 2005) décrit une croissance par épitaxie de sous phosphure de bore sur un substrat en carbure de silicium, par dépôt chimique en phase vapeur.

Selon un deuxième type de synthèse, le sous phosphure de bore B₁₂P₂ est obtenu par décomposition thermique du phosphure de bore BP, à une température de plus de 1500 K, en atmosphère réductrice. Le document Slack et al. (Melt growth and properties of B6P crystals, Journal of the Physics and Chemistry of Solids 1983, vol.44, no.10, pp. 1009-13, 10.1016/0022-3697(83)90151-8*)* décrit la production de sous phosphure de bore, de composition très proche de B₁₂P₂, par chauffage de phosphure de bore BP à une température de 1250°C pendant 11 heures, sous un flux d'hydrogène.

Selon un troisième type de synthèse, le sous phosphure de bore est obtenu par synthèse directe, à partir d'une poudre de bore et d'une poudre de phosphore. Le document Yang et al. (Synthesis and cell refinement for icosahedral boron phosphide B12P2, 10.1017/s0885715600014949) décrit un procédé de ce type, le mélange des deux poudres étant chauffé par induction à 1400°C pendant une heure, sous une pression d'argon de 50 bar (750 psi).

Il a par ailleurs été proposé de produire du sous phosphure de bore B₁₂P₂ par un procédé de type SHS (*Self-propagating High-temperature Synthesis*)*,* parfois dénommé synthèse par combustion ou synthèse auto-propagée.

Les procédés SHS ont été proposés pour la production de différents matériaux céramiques (borures, siliciures, oxydes, nitrures, carbures, en particulier carbure de titane) ou de matériaux intermétalliques.

Une réaction de type SHS consiste en un mélange intime de réactifs, généralement sous forme de poudres, suivi d'une compaction à haute pression, la réaction étant ensuite amorcée par un apport brutal et local d'énergie, à l'air libre. La réaction, fortement exothermique, se propage jusqu'à consommation complète des réactifs.

Les principes des procédés SHS sont présentés dans l'ouvrage de Tavadze et al. (Production of advanced materials by methods of self-propagating high-temperature synthesis, Springer, 2013*).* Des sous catégories de procédé SHS peuvent être identifiées, voir par exemple Morsi (The diversity of combustion synthesis processing : a review, J Mater Sci 2012, 10.10071s10853.011-5926-5)*.*

*Mukhanov et al. (Self-propagating high-temperature synthesis of boron subphosphide B₁₂P₂*, *Journal of Superhard Materials 36, 2014, 10.3103*/*S1063457614010031)* proposent deux synthèses de sous phosphure de bore B₁₂P₂ par un procédé SHS sous atmosphère argon à partir d'un élément compacté de réactifs.

Une première synthèse est effectuée à partir d'un mélange d'un verre B₁₂P₂O₂₃ et de magnésium, sous argon, selon la réaction suivante :

B₁₂P₂O₂₃ + 23 Mg → B₁₂P₂ + 23 MgO

la température de réaction étant supérieure à 1300 K.

Une deuxième synthèse est une réduction de phosphate de bore, selon la réaction suivante :

2BPO₄ + 5MgB₂ + 3Mg → B₁₂P₂ + 8MgO.

US 2017203965 décrit un procédé de production de phosphure de bore BP comprenant une étape de mélange de phosphate de bore BPO₄ et de magnésium métallique, une étape de compaction du mélange à une pression de l'ordre de 20 000 psi (137 MPa), et une étape d'inflammation en appliquant un apport d'énergie, à l'aide d'un fil fusible chauffé, la compaction permettant de réduire la formation d'impuretés telles que le sous phosphure B₁₂P₂.

Les procédés de synthèse de l'état de la technique pour la production de sous phosphure de bore B₁₂P₂ présentent de nombreux inconvénients. Les procédés de synthèse des sous phosphures de bore sont lents, chers, compliqués, dangereux (utilisation d'éléments toxiques), à faible rendement, le sous phosphure de bore B₁₂P₂ obtenu présentant une pureté faible.

L'utilisation de traitements thermiques longs et à haute température est très énergivore, polluant et dangereux, rendant de tels procédés peu compétitifs économiquement.

Les durées et difficultés de mises en œuvre des méthodes de synthèse du sous phosphure de bore Bi₂P₂ sont telles que, malgré ses propriétés mécaniques, thermiques et électroniques intéressantes, le sous phosphure de bore B₁₂P₂ est encore peu utilisé dans l'industrie.

### EXPOSE DE L'INVENTION

L'invention vise à pallier les inconvénients des procédés de l'art antérieur, en proposant la synthèse de sous phosphure de bore B₁₂P₂ en grand volume, à moindre coût, avec une faible consommation énergétique.

L'invention propose une solution de production de sous phosphure de B₁₂P₂ simple, sûre et rapide avec des réactifs peu chers et disponibles facilement en grande quantité.

A ces fins, il est proposé, selon un premier aspect, un procédé de production de sous phosphure de bore B₁₂P₂ par synthèse auto-propagée, le procédé comprenant une étape de mélange de réactifs, sous forme de poudres, suivi d'une étape d'amorçage d'une réaction exothermique, la réaction exothermique étant effectuée dans une enceinte fermée.

Avantageusement, le procédé de production de sous phosphure de bore B₁₂P₂ par synthèse auto-propagée à haute température, avantageusement supérieure à 1800K, comprend :
- une étape de mélange homogène de réactifs, sous forme de poudres, comprenant au moins
   un métal alcalino-terreux tel que du magnésium ou du calcium, et
   un composé comprenant du bore B et du phosphore P, tel que du
   phosphate de bore BPO₄ ou B₁₂P₂O₂₃
- une étape de remplissage d'un réacteur par le mélange homogène de réactifs, le réacteur comprenant au moins un élément chauffant et une couche d'isolant thermique sur une paroi intérieure du fond du réacteur et une couche d'isolant thermique sur une ou des parois intérieures latérales, l'isolant thermique étant inerte chimiquement et étant destiné à entourer le mélange homogène de réactifs lors de la réaction, et à le séparer des parois du réacteur,
- une étape de recouvrement de la partie supérieure du mélange homogène de réactifs par une couche d'isolant thermique chimiquement inerte,
- une étape de fermeture hermétique du réacteur,
- une étape d'amorçage d'une réaction exothermique dans le mélange homogène de réactifs, par le déclenchement de l'élément chauffant,
- une étape de réaction exothermique à haute température qui s'auto-propage dans l'ensemble du mélange de réactifs du réacteur pour obtenir le sous phosphure de bore B₁₂P₂.

La fermeture hermétique du réacteur empêche le magnésium gazeux de s'échapper hors du réacteur au moment de la réaction, et permet le confinement thermique en évitant le contact avec l'air, pour permettre d'obtenir une grande pureté du B₁₂P₂ au moins supérieure à 80%, voire avantageusement supérieure à 90%.

Lors de la réaction exothermique, des températures de l'ordre de 2000K peuvent être atteintes localement. L'enceinte dans laquelle est effectuée la réaction exothermique forme un réacteur fermé, évitant les réactions d'oxydation.

Dans certaines mises en œuvre, les réactifs comprennent de l'acide phosphorique, de l'acide borique et du magnésium, la réaction exothermique étant selon l'équation de réaction (2)

12 H₃BO₃ + 2 H₃PO₄ → B₁₂P₂O₂₃ + 21 H₂O puis

B₁₂P₂O₂₃ + 23 Mg → B₁₂P₂ + 23 MgO (2)

Dans d'autres mises en œuvre, les réactifs comprennent du phosphate de bore, du magnésium et du diborure de magnésium, la réaction exothermique étant selon l'équation de réaction (1)

2 BPO₄ + 3 Mg + 5 MgB₂ → B₁₂P₂ + 8 MgO (1).

L'enceinte dans laquelle est effectuée la réaction exothermique forme un réacteur fermé, évitant la fuite de vapeurs, en particulier de vapeurs de magnésium dans l'air, hors de l'enceinte. La température d'ébullition du magnésium, de l'ordre de 1363 K est bien inférieure aux températures de la réaction exothermique, de l'ordre de 2000 K.

Avantageusement, le magnésium est en excès dans le mélange des réactifs, par rapport à la stœchiométrie de l'équation (1) ou de l'équation (2). Dans certaines mises en œuvre, le magnésium est en excès de 22% dans le mélange des réactifs, par rapport à la stœchiométrie de l'équation (1).

Avantageusement, le diborure de magnésium est en excès dans le mélange des réactifs, par rapport à la stœchiométrie de l'équation (1). L'excès de magnésium dans le mélange des réactifs permet d'assurer une réduction complète des réactifs, et permet également de contrôler la température finale de la réaction, par l'introduction d'une capacité thermique additionnelle et de fortes chaleurs latentes de fusion et surtout d'ébullition du magnésium.

Avantageusement, l'étape de mélange homogène des réactifs est effectuée au moyen d'un mélangeur bidimensionnel de poudres ou un mélangeur dynamique tridimensionnel de poudres, tel qu'un mélangeur apte à assurer des mouvements de rotation, des mouvements de translation et des mouvements d'inversion à un récipient de mélange, par exemple pendant une durée supérieure à 1 heure, avantageusement supérieure à 10 heures. Un tel mélangeur est par exemple du type commercialisé sous la marque Turbula^{®}.

Dans certaines mises en œuvre, l'étape d'amorçage comprend la chauffe d'un élément résistif. L'élément résistif est par exemple un filament de tungstène. Dans des mises en œuvre particulières, le filament de tungstène présente un diamètre d'une centaine de microns et une longueur de quelques centimètres.

Avantageusement, le procédé comprend une étape de mise en place d'un matériau isolant thermiquement entre le mélange de réactifs en poudre et la paroi de l'enceinte fermée. Le matériau isolant thermique est avantageusement inerte chimiquement, par exemple une poudre de chlorure de sodium, ou un autre sel tel que KCl ou MgO, ou sable minéral. Avantageusement, le matériau isolant est sous forme de poudre.

Avantageusement, le procédé comprend une étape de refroidissement de l'enceinte formant le réacteur, l'enceinte étant maintenue fermée jusqu'à la fin du refroidissement. Le refroidissement est par exemple assuré par une circulation de fluide caloporteur.

Le procédé comprend une étape d'extraction du produit de la réaction exothermique, le produit extrait du réacteur étant soumis à un broyage et un lavage, le lavage comprenant avantageusement une lixiviation. Dans certaines mises en œuvre, la poudre issue du broyage du produit de la réaction exothermique est placée dans un bain d'acide chlorhydrique, la solution obtenue étant ensuite soumise à une filtration sous vide, par exemple avec des filtres nanométriques, choisis notamment pour leur résistance aux acides, tels que des filtres en polyéthersulfone Millipore-MF.

Dans des mises en œuvre particulières, le lavage comprend une lixiviation à l'eau régale.

Avantageusement, le mélange des réactifs en poudre n'est pas compacté avant l'étape d'amorçage. En d'autres termes, le remplissage du mélange des réactifs en poudre dans le réacteur est avantageusement réalisé sans compactage.

Avantageusement, le taux de remplissage dans le réacteur, correspondant au rapport entre le volume de l'échantillon et le volume du réacteur, est supérieur à 25%.

Dans certaines mises en œuvre, le procédé est tel que :
- le taux de remplissage est supérieur à 25%, et
- l'excès de magnésium est entre 10% et 50%, avantageusement entre 20% et 25%, avantageusement avec un excès de diborure de magnésium jusqu'à 20%,
permettant d'obtenir des températures supérieures à 1500°C dans tout le mélange de réactifs lors de l'étape de réaction exothermique auto-propagée, afin d'avoir une pureté du mélange supérieure à 80% de B₁₂P₂, avantageusement supérieure à 95% de B₁₂P₂.

Avantageusement, la réaction exothermique est effectuée sans solvant. Avantageusement, le réacteur présente un volume permettant de réaliser des masses de sous phosphure de bore supérieures à 50g, avantageusement supérieures à 100g, et encore plus avantageusement supérieures à 500g.

Avantageusement, l'étape de remplissage comporte l'insertion d'une paroi intercalaire maintenue dans l'espace interne du réacteur, le temps du remplissage par l'isolant de l'espace situé entre les parois intérieurs latérales du réacteur et la paroi intercalaire, puis le temps du remplissage par le mélange de réactif du volume central du réacteur défini par l'espace intérieur du réacteur entouré par la paroi intercalaire jusqu'à une hauteur donnée dans le réacteur.

L'invention se rapporte, selon un deuxième aspect, à un sous phosphure de bore B₁₂P₂ obtenu selon le procédé présenté ci-dessus, le sous phosphure de bore B₁₂P₂ obtenu comportant :
- des particules de B₁₂P₂ ont des tailles qui varient de 50 à 500 nm avec des formes icosaédriques arrondies,
- des particules de B₁₂P₂ de tailles microniques avec une morphologie de type « bâtonnets facettés », par exemple d'une longueur comprise entre 1 et 10 microns.

Avantageusement, il est proposé un mélange comprenant uniquement :
- du sous phosphure de bore B₁₂P₂ tel que présenté ci-dessous, et
- du phosphure de bore BP,
avec une pureté du mélange en sous phosphure de bore B₁₂P₂ supérieure à 90%, avantageusement supérieure à 95%, avantageusement supérieure à 98%.

Il est proposé, selon un troisième aspect, l'utilisation du sous phosphure de bore obtenu par un procédé tel que présenté ci-dessus, comme matériau dur dans les outils d'usinage ou de coupe, les filières de tréfilage, les revêtements de protection contre l'usure, les outils de gros œuvre du bâtiment, des mines ou des carrières, les outils de forage, les munitions perce-blindage, les gilets pare-balles.

Il est proposé, selon un quatrième aspect, l'utilisation du sous phosphure de bore obtenu par un procédé tel que présenté ci-dessus, comme matériau conducteur de chaleur ou matériau thermoélectrique.

Il est proposé, selon un cinquième aspect, l'utilisation du sous phosphure de bore obtenu par un procédé tel que présenté ci-dessus, comme charge dans une résine thermodurcissable.

Il est proposé, selon un autre aspect, l'utilisation du sous phosphure de bore obtenu par un procédé tel que présenté ci-dessus, comme matériau absorbant de neutrons.

Il est proposé, selon un autre aspect, l'utilisation du sous phosphure de bore obtenu par un procédé tel que présenté ci-dessus, comme matériau en poudre pour la fabrication par frittage d'une céramique pour le blindage.

### DESCRIPTION DES FIGURES

D'autres objets et avantages de l'invention apparaîtront à la lumière de la description de modes de réalisation, faite ci-après en référence aux dessins annexés dans lesquels :
- la figure 1 est une vue externe de trois réacteurs fermés ayant des capacités respectives de 50g, 100g et 500g, pour la synthèse de sous phosphure de bore B₁₂P₂;
- la figure 2 est un diffractogramme d'une poudre de sous phosphure de bore B₁₂P₂ obtenue dans un réacteur fermé d'une capacité de 100g tel que représenté en figure 1 ;
- la figure 3 sont deux images de microscopie électronique à balayage d'une poudre de sous phosphure de bore B₁₂P₂ obtenue dans un réacteur fermé d'une capacité de 100g tel que représenté en figure 1 ;
- les figures 4 à 12 sont des vues des étapes de remplissage d'un réacteur, selon une mise en œuvre.

### DESCRIPTION DETAILLEE DE L'INVENTION

Le procédé utilise avantageusement un réacteur fermé, des réactifs non-compactés et une lixiviation, pour produire à grande échelle et à bas coût du sous phosphure de bore B₁₂P₂.

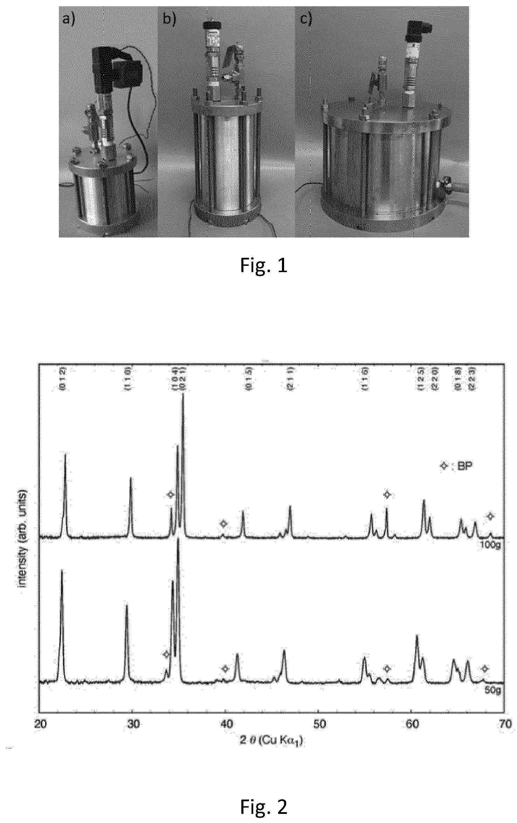

En figure 1 sont représentés trois réacteurs fermés, permettant de contenir des quantités de réactifs suffisantes pour synthétiser 50g, 100g et 500g de poudres, respectivement.

Le procédé de synthèse de sous phosphure de bore B₁₂P₂ repose sur des réactions fortement exothermiques entre réactifs solides ou gazeux, en l'absence de solvant, ces réactions d'oxydo-réduction étant les suivantes

2 BPO₄ + 3 Mg + 5 MgB₂ → B₁₂P₂ + 8 MgO

ou

12 H₃BO₃ + 2 H₃PO₄ → B₁₂P₂O₂₃ + 21 H₂O

puis

B₁₂P₂O₂₃ + 23 Mg → B₁₂P₂ + 23 MgO

Dans d'autres mises en œuvre, du calcium est utilisé en lieu et place du magnésium.

Pour des raisons de simplicité, nous ne présentons ici que les résultats concernant le sous phosphure de bore B₁₂P₂ synthétisé en utilisant la réaction

2 BPO₄ + 3 Mg + 5 MgB₂ → B₁₂P₂ + 8 MgO.

Le mélange réactif utilise le phosphate de bore BPO₄ et le diborure de magnésium MgB₂ comme sources de bore et de phosphore, et le magnésium Mg comme réducteur principal.

Il est à noter que le diborure de magnésium MgB₂ contribue également à ce rôle.

La réaction est extrêmement exothermique, avec une température finale qui peut dépasser les 2000 K, ce qui est bien au-delà de la température d'ébullition du magnésium.

Afin d'assurer une réduction complète des réactifs, le magnésium est avantageusement en excès dans le mélange.

Cet excès de magnésium permet également de contrôler la température finale de la réaction, par l'introduction d'une capacité thermique additionnelle et de fortes chaleurs latentes de fusion et surtout d'ébullition du magnésium.

Par ailleurs, le diborure de magnésium MgB₂ est avantageusement en excès dans le mélange, de manière à pouvoir limiter la quantité de phosphure de bore BP présent en tant que sous-produit, dans les poudres finales de sous phosphure de bore B₁₂P₂.

Ces conditions expérimentales ont permis d'éliminer entièrement le phosphate de bore BPO₄, et le rendement final de la réaction est de 80%. Avantageusement, un calcul de la température adiabatique est effectué, en utilisant les bases de données du NIST (*National Institute of Standards and Technology*) des différents produits des réactions.

La figure 2 présente les diffractogrammes RX de la poudre de sous phosphure de bore B₁₂P₂ obtenue pour des lots de 50g et 100g dans le réacteur intermédiaire d'une capacité de 100g représenté en figure 1. Un affinement de Rietveld des diffractogrammes a été réalisé, en utilisant le logiciel MAUD (*Material Analysis Using Diffraction*) sur ces deux lots de poudres.

L'affinement de Rietveld est présenté par exemple par Stephens (Uniting electron crystallography and powder diffraction, 2012, 10.1007/978-94-007-5580-2_2)*.* L'affinement de Rietveld est une méthode de simulation globale des diagrammes de diffraction des rayons X sur des échantillons polycristallins, cette méthode étant implantée dans différents logiciels tels que FullProf, Jana2006 et MAUD. Le logiciel MAUD a été développé par Luca Lutterotti (L. Lutterotti et al. MAUD: a friendly Java program for material analysis using diffraction. IUCr: Newsletter of the CPD, 21:14-15, 1999*).*

Les poudres sont constituées de sous phosphure de bore B₁₂P₂ à 97,441% et de phosphure de bore BP comme impureté à 2,559%.

La structure rhomboédrique est observée pour les différents diffractogrammes, avec un groupe d'espace R-3m. Les paramètres de mailles du sous phosphure de bore B₁₂P₂ sont a = 6,01025 Å et c = 11,90010 Å dans la maille hexagonale.

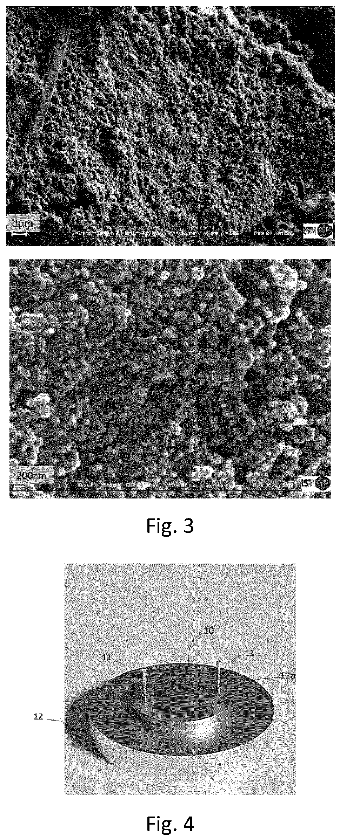

La figure 3 présente l'analyse morphologique des poudres obtenues, par microscopie électronique à balayage.

On observe deux populations de particules distinctes.

Un très faible nombre de particules possède des tailles microniques, avec une morphologie de type bâtonnets facettés.

Pour le reste, la grande majorité des particules de sous phosphure de bore B₁₂P₂ ont des tailles qui varient de 50 à 500 nm, avec des formes icosaédriques légèrement arrondies.

Les étapes d'un procédé vont maintenant être décrites plus en détail. Les poudres sont tout d'abord pesées, puis sont homogénéisées dans un mélangeur pendant 24 heures.

Le mélangeur peut être à cuve tournante (en cube, à tambour tournant, à double cône), ou encore un mélangeur convectif comprenant une cuve fixe et un mobile tournant à l'intérieur de la cuve, un mélangeur à lit fluidisé ou un mélangeur statique.

Avantageusement, le mélangeur est de type à mouvement complexe, assurant un mouvement de rotation, de translation et d'inversion à un récipient de mélange, les mouvements étant pulsatoires.

Le mélangeur est par exemple du type commercialisé sous la marque Turbula^{®} par la société Willy Bachofen AG. Une présentation des mélangeurs Turbula est proposée par Mayer-Laigle (Etude dynamique et effet du changement d'échelle pour plusieurs systèmes particulaires en mélangeur Turbula®, thèse 2012*).*

Ce mélangeur permet l'obtention d'un mélange final de très grande qualité.

Les poudres sont ensuite placées dans le réacteur, entourées dans toutes les directions par des parois isolantes, assurant l'isolation thermique et chimique avec les parois extérieures du réacteur.

La paroi isolante est par exemple formée par un matériau en poudre, tel que chlorure de sodium ou un sable minéral.

L'épaisseur de cette paroi isolante thermique doit être choisie pour limiter la vitesse de refroidissement de l'échantillon, ce qui avantageusement augmente la pureté du produit en diminuant la quantité de BP, et pour permettre une évacuation plus progressive de la chaleur et ainsi éviter un échauffement excessif des parois du réacteur qui pourrait nuire à leur intégrité.

Elle est par exemple comprise entre 2 et 3 cm, pour une longueur transversale caractéristique du mélange homogène des réactifs comprise entre 4 et 6 cm et une hauteur caractéristique comprise entre 10 et 16 cm.

Les figures 4 à 12 illustrent une mise en œuvre du remplissage d'un réacteur.

Dans une première étape, représentée en figure 4, un élément chauffant 10 tel qu'un filament résistif est placé en partie inférieure du réacteur. Le filament résistif 10 est par exemple un filament de tungstène. A titre indicatif, le filament de tungstène présente un diamètre d'une centaine de microns et une longueur de quelques centimètres. Les deux extrémités du filament sont connectées chacune à un plot 11 monté sur la base 12 du réacteur, avec une paroi intérieure 12a en contact avec l'isolant thermique.

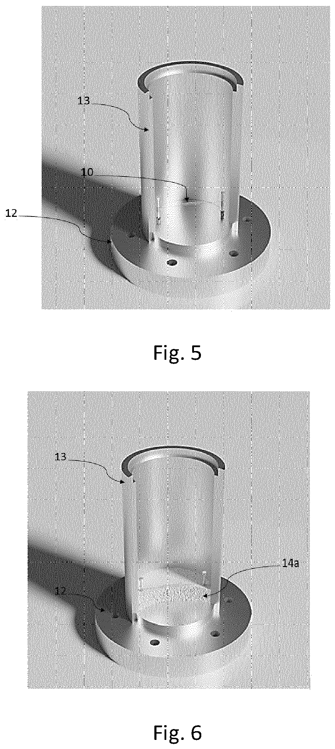

Dans une deuxième étape, représentée en figure 5, la paroi intérieure 13 du réacteur est mise en place sur la base 12. Dans la réalisation représentée, la paroi intérieure 13 est un cylindre de révolution, dont l'axe d'élancement est perpendiculaire à la base 12 du réacteur. Dans d'autres mises en œuvre, la paroi interne se présente sous la forme d'une pièce profilée de section transversale carrée ou polygonale. Afin de faciliter la compréhension, la paroi 13 est représentée en coupe partielle, dans les figures 5 à 11. La paroi intérieure 13 est par exemple emboitée ou emmanchée sur la base 12 du réacteur. Lorsque la paroi intérieure 13 est en place, un volume interne au réacteur est défini latéralement par cette paroi interne 13 et par la base 12 du réacteur. Ce volume est ouvert en partie supérieure, permettant le remplissage du réacteur. Le filament résistif est placé dans ce volume interne.

Dans une troisième étape, représentée en figure 6, une paroi isolante 14a est placée dans le fond du volume interne du réacteur.

Avantageusement, cette paroi isolante 14a est formée d'une poudre d'un matériau isolant thermiquement et chimiquement inerte, par exemple une poudre de sel tel que du chlorure de sodium ou un autre sel, du KCI ou du MgO, permettant de confiner la thermique lors de la réaction et d'éviter lors de la réaction fortement exothermique, la migration d'éléments chimiques des parois du réacteur vers le mélange homogène de réactifs, permettant d'obtenir une grande pureté du produit obtenu B₁₂P₂ . La paroi isolante 14a est ainsi facilement placée dans l'espace interne du réacteur, en dessous du filament résistif 10.

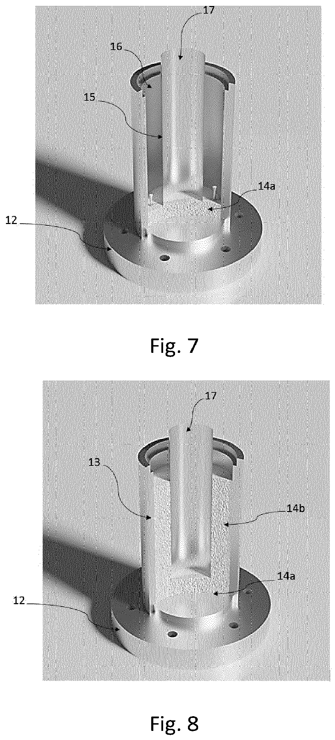

Dans une quatrième étape, représentée en figure 7, une paroi intercalaire 15 est insérée et maintenue dans l'espace interne du réacteur, cette paroi interne séparant un volume annulaire périphérique 16 d'un volume central 17. Dans la mise en œuvre représentée, la paroi intercalaire se présente sous la forme d'une pièce de révolution cylindrique, par exemple un cylindre en acier, tel qu'un feuillard. Elle ne doit pas abimer l'élément chauffant 10 lors de son insertion et doit présenter des ouvertures ou autres pour laisser passer le filament.

Dans une cinquième étape, représentée en figure 8, une paroi isolante 14b est formée dans l'espace annulaire périphérique 16, avantageusement par remplissage de cet espace annulaire d'une poudre de matériau isolant et chimiquement inerte. Cette poudre est avantageusement la même que celle ayant formé la paroi isolante 14a en partie basse du réacteur R.

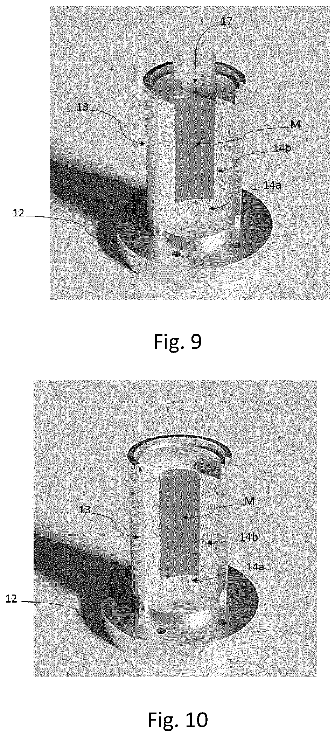

Dans une sixième étape, représentée en figure 9, le mélange de poudre réactive est placé dans le volume central 17 du réacteur. Ce mélange de poudre réactive est en contact avec le filament résistif 10.

Dans une septième étape, représentée en figure 10, la paroi intercalaire 15 est retirée.

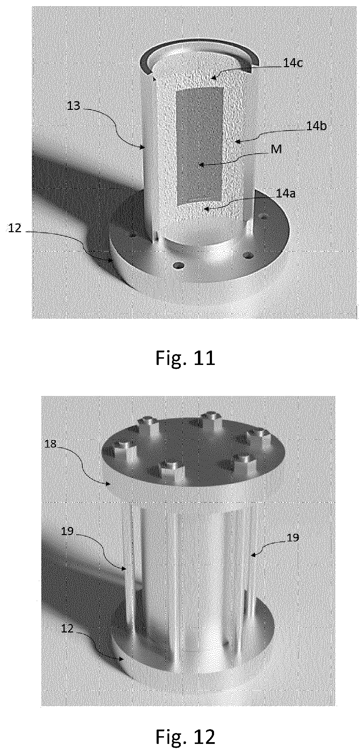

Dans une huitième étape, représentée en figure 11, une paroi isolante 14c est formée en partie haute du réacteur. Avantageusement, cette paroi isolante 14c est formée par une poudre isolante et chimiquement inerte, en particulier celle ayant servi à former la paroi isolante 14a en partie basse du réacteur (figure 6), ou celle ayant servi à former la paroi isolante latérale 14b du réacteur (figure 8), par exemple une poudre de sel, ou de sable. La poudre isolante est placée dans le réacteur jusqu'à remplissage complet du réacteur.

Dans une neuvième étape, représentée en figure 12, le réacteur est hermétiquement fermé, permettant un confinement du mélange homogène de réactifs, isolé thermiquement et de l'atmosphère ambiante au réacteur. Avantageusement, le réacteur comprend un flasque inférieur formant la base 12 du réacteur et un flasque supérieur formant le couvercle 18 du réacteur, des tiges 19 de renfort reliant les deux flasques.

La réaction est amorcée, une fois le réacteur hermétiquement fermé, avantageusement par un élément chauffant, tel qu'un filament fusible chauffant, par exemple un filament de tungstène positionné au sein du mélange réactif. Le filament de tungstène présente par exemple un diamètre d'une centaine de microns, et une longueur de quelques centimètres, et est chauffé par effet Joule.

Une fois amorcée, la réaction est complète au bout de quelques secondes.

Le réacteur est alors maintenu fermé jusqu'à la fin du refroidissement de l'échantillon, puis celui-ci est extrait, broyé et lixivié pour dissoudre le chlorure de sodium NaCI et l'oxyde de magnésium MgO.

Dans une mise en œuvre avantageuse, les poudres obtenues sont placées dans un bain d'acide chlorhydrique 2M, à 110°C, sous agitation magnétique pendant 1h, afin de dissoudre l'oxyde de magnésium MgO et le chlorure de sodium NaCl.

La solution est ensuite filtrée sous vide, par exemple en utilisant des filtres en polyéthersulfone Millipore-MF^{®} de 220 nm choisis notamment pour leur résistance aux acides.

Cette opération est avantageusement répétée deux fois successivement.

Avantageusement, on effectue une dernière lixiviation à l'aide d'eau régale, avec un rapport HNO₃/HCl de 1/3 pour éliminer les dernières impuretés.

Le produit final est ensuite lavé plusieurs fois avec de l'eau distillée, afin d'éliminer les résidus présents à la surface des poudres.

Enfin, les poudres sont séchées dans une étuve.

Plusieurs paramètres influent sur le rendement de la réaction, et une étude paramétrique a été réalisée, avec pour objectifs d'obtenir la réaction la plus complète possible, en réduisant au maximum la phase d'oxyde (BPO₄) et en favorisant la formation de sous phosphure de bore B₁₂P₂ par rapport à celle du phosphure de bore BP.

L'excès de magnésium Mg, permet avantageusement une meilleure réduction de la phase d'oxydes.

L'excès de diborure de magnésium MgB₂ permet avantageusement de réduire la quantité de phosphure de bore BP produite, tout en apportant une légère amélioration au pouvoir réducteur du mélange réactionnel. Le volume global du réacteur et le rapport entre le volume de l'échantillon et la masse du mélange réactionnel déterminent le rapport entre le volume de l'échantillon et le volume du réacteur, c'est-à-dire le taux de remplissage du réacteur en mélange réactionnel.

Avantageusement :
- le taux de remplissage supérieur à 25%, et
- l'excès de magnésium est entre 10% et 50%, avantageusement entre 20% et 25%, permettant une réduction complète de l'oxyde BPO₄. En plus de cet excès de magnésium, avantageusement il peut y voir un excès de diborure de magnésium jusqu'à 20%, permettant d'ajuster au plus près le rapport stœchiométrique B:P de 6:1.

Il a été constaté qu'un excès de 22% de magnésium Mg, sans excès de diborure de magnésium MgB₂, a permis d'atteindre un rendement approchant les 80%.

La place qu'occupe l'échantillon dans le réacteur a un impact non négligeable sur la pureté finale du produit.

La pureté du sous phosphure de bore B₁₂P₂ dans un réacteur de capacité 50g est ainsi de 86%, et cette pureté passe à 98% dans le réacteur intermédiaire d'une capacité de 100g. Dans les deux cas, l'impureté principale et unique dans le sous phosphure de bore B₁₂P₂ est le phosphure de bore BP.

Avantageusement, le réacteur présente un diamètre intérieur de 10 cm et une hauteur de 20 cm, le volume interne total du réacteur étant de 1570 cm³.

Avantageusement, la poudre occupe dans le réacteur un volume compris entre 180 cm³ et 350 cm³. Ces volumes correspondent à des cylindres d'un diamètre de 5 cm ayant une hauteur comprise entre 9 et 18 cm. Avantageusement, la poudre de réactifs n'est pas compressée pour faciliter l'amorçage de la réaction.

Avantageusement, la poudre de réactifs présente une faible possibilité d'expansion, afin que les différents précurseurs restent en contact lors de la propagation de la réaction, ce qui permet une synthèse plus complète.

Avantageusement, l'ensemble du réacteur est rempli, la partie non occupée par le mélange réactionnel contenant un matériau isolant, par exemple du chlorure de sodium ou du sable.

De cette manière, la chaleur résiduelle est conservée plus longtemps, ce qui favorise les phénomènes d'auto-purification et favorise grandement la synthèse de sous phosphure de bore B₁₂P₂ par rapport à celle de phosphure de bore BP.

Le procédé selon l'invention présente de nombreux avantages.

Le procédé est sûr, pratique, rapide et peu coûteux, avec une mise en œuvre simple et une facilité de mise à l'échelle, pour la production de sous phosphure de bore B₁₂P₂.

Le procédé permet la synthèse d'un matériau à forte valeur ajoutée, en utilisant des réactifs peu coûteux et un dispositif facile à mettre en œuvre.

Le procédé ne nécessite par ailleurs que peu de main d'œuvre, permettant d'en réduire le coût.

Le procédé permet, par l'utilisation de réaction SHS en espace confiné (réacteurs fermés), de réaliser des synthèses de quantités de poudres B₁₂P₂ pouvant atteindre 100g, à partir de réactifs non compactés.

Le rendement est remarquablement très élevé, de l'ordre de 80%.

La pureté est également extrêmement élevée, de l'ordre de 97%.

Le procédé est rapide et présente une très faible consommation énergétique. L'invention permet ainsi la synthèse de sous phosphure de bore B₁₂P₂, en grand volume, à moindre coût, avec une faible consommation énergétique.

L'utilisation de ce matériau aux propriétés mécaniques exceptionnelles était jusqu'à présent peu développée, précisément du fait de l'absence de possibilité de synthèse à grande échelle avec un bon potentiel économique.

Le procédé permet une production de ce sous phosphure de bore B₁₂P₂ en grand volume, le sous phosphure présentant une très grande dureté, une remarquable stabilité chimique et thermique, le sous phosphure étant réfractaire, semi-conducteur à large gap, et présentant un pouvoir thermoélectrique à haut facteur de mérite à haute température.

Le sous phosphure de bore obtenu par le procédé selon l'invention est avantageusement utilisé comme matériau dur, en alternative au carbure de tungstène.

La synthèse du carbure de tungstène CW est très coûteuse, et se produit à partir des éléments à des températures très élevées, entre 1700 K et 2300 K.

De plus, le frittage du carbure de tungstène CW se fait par l'adjonction d'un liant, le cobalt. L'exposition chronique aux poussières de cobalt associées au carbure de tungstène entraîne des maladies professionnelles, cutanées, respiratoires et tumorales (voir par exemple Robert (Analyse temporelle des expositions et des pathologies professionnelles françaises liées au cobalt et aux poussières de métaux durs, de la fin des années 1990 à 2020, thèse de pharmacie, 2021*).*

Le sous phosphure de bore B₁₂P₂ a des propriétés bien supérieures au carbure de tungstène (plus dur, plus résistant aux agressions chimiques ou thermiques) et le procédé selon l'invention est bien moins coûteux que celui permettant la synthèse du carbure de tungstène CW.

De plus, le frittage sans liant des sous phosphures de bore est possible, suggérant des possibilités de frittage sans liant à faible pression par des méthodes conventionnelles.

Le sous phosphure de bore B₁₂P₂ obtenu (dureté -35 GPa, comparable au c-BN commercial) trouve avantageusement de nombreux usages, aujourd'hui réservés au carbure de tungstène (ou au c-BN), tels que les outils d'usinage et de coupe (scies, forets, alésoirs, canons de guidage, fraises, outils de tour, poinçons), les filières de tréfilage ou de compactage, des revêtements de protection d'usure (pour les aubes des turbines des moteurs d'avion, des centrales à gaz, des fours métallurgiques), des outils de gros œuvre (travaux publics, aplanissement de terrain, têtes d'outils de forage, exploitation des mines et des carrières, tunneliers), mais aussi des billes de stylos, des munitions perce-blindages, des gilets pare-balles.

Le sous phosphure de bore obtenu par le procédé selon l'invention est avantageusement utilisé comme matériau conducteur de chaleur, par exemple dans les circuits intégrés.

En effet, avec l'accroissement constant de la densité de puissance des composants microélectroniques, la sollicitation thermique de ces composants augmente de manière exponentielle.

Avec des densités de chaleur importantes, la dissipation thermique exige des matériaux possédant des caractéristiques thermophysiques remarquables, de type des matériaux durs comme le sous phosphure de bore B₁₂P₂.

Le sous phosphure de bore obtenu par le procédé selon l'invention est avantageusement utilisé comme matériau thermoélectrique à haute température.

Dans le domaine de la microélectronique, il est possible de doper le sous phosphure de bore B₁₂P₂ de type p ou n, et donc de réaliser des diodes fonctionnant en environnements agressifs (chimique, thermique ou mécanique) ou encore pour l'électronique de puissance.

Aussi, le sous phosphure de bore B₁₂P₂ peut avoir des applications importantes comme matériau thermoélectrique à haute température.

Le sous phosphure de bore obtenu par le procédé selon l'invention est avantageusement utilisé comme charge dans une résine thermodurcissable.

L'ajout d'un matériau dur, léger, conducteur thermique dans des résines thermodurcissables permet d'en renforcer les résistances thermomécaniques et chimiques.

Ces matériaux thermodurcissables revêtent un intérêt croissant pour leurs propriétés remarquables : très bonne tenue mécanique, ainsi qu'une bonne résistance aux produits chimiques (matériaux non réactifs) et à la chaleur.

Le sous phosphure de bore obtenu par le procédé selon l'invention est avantageusement utilisé dans le domaine nucléaire, en raison de sa section efficace d'absorption neutronique élevée, en alternative au bore ou au carbure de bore.

Le bore pur est difficile à produire dans des formes spécifiques (par exemple pour les barres de contrôle dans les centrales nucléaires), c'est pourquoi on lui substitue généralement dans ces applications le carbure de bore, offrant une forte concentration d'atomes de bore dans une forme solide, réfractaire et résistant aux agressions chimiques.

Néanmoins, la production de carbure de bore B₄C se fait à très haute température et est relativement complexe.

Aussi la simplicité de synthèse à bas coût du sous phosphure de bore B₁₂P₂ pourrait permettre de promouvoir ce matériau dans des applications nucléaires, et de remplacer ainsi le carbure de bore B₄C dans certains cas particuliers.

## Revendications

1. Procédé de production de sous phosphure de bore B₁₂P₂ par synthèse auto-propagée à haute température, le procédé comprenant :
- une étape de mélange homogène de réactifs, sous forme de poudres, comprenant au moins :
✔ un métal alcalino-terreux tel que du magnésium ou du calcium, et
✔ un composé comprenant du bore B et du phosphore P, tel que du phosphate de bore BPO₄ ou B₁₂P₂O₂₃
- une étape de remplissage d'un réacteur (R) par le mélange (M) homogène de réactifs,
le réacteur comprenant au moins :
✔ un élément chauffant (10) ,
✔ une couche d'isolant thermique(14a) sur une paroi intérieure du fond du réacteur (12a) et une couche d'isolant (14b) sur une ou des parois intérieures latérales (13), l'isolant thermique étant inerte chimiquement et étant destiné à entourer le mélange (M) homogène de réactifs lors de la réaction et à le séparer des parois du réacteur (12a, 13),
- une étape de recouvrement de la partie supérieure du mélange (M) homogène de réactifs par une couche d'isolant thermique chimiquement inerte (14c),
- une étape de fermeture hermétique du réacteur,
- une étape d'amorçage d'une réaction exothermique dans le mélange (M) homogène de réactifs, par le déclenchement de l'élément chauffant (10),
- une étape de réaction exothermique à haute température qui s'auto-propage dans l'ensemble du mélange (M) de réactifs du réacteur R pour obtenir le sous phosphure de bore B₁₂P₂.

2. Procédé selon la revendication 1, **caractérisé en ce que** le mélange homogène (M) de réactif est réalisé par un mélangeur bi-dimensionnel de poudres ou un mélangeur tri-dimensionnel de poudres, tel qu'un mélangeur apte à assurer des mouvements de rotation, des mouvements de translation et des mouvements d'inversion à un récipient de mélange, par exemple pendant une durée supérieure à 1 heure, avantageusement supérieure à 10 heures.

3. Procédé selon l'une des revendications 1 à 2, **caractérisé en ce que** le remplissage du mélange des réactifs en poudre dans le réacteur (R) est réalisé sans compactage.

4. Procédé selon l'une des revendications 1 à 3, **caractérisé en ce que** le taux de remplissage dans le réacteur (R) correspondant au rapport entre le volume de l'échantillon et le volume du réacteur (R) est supérieur à 25%.

5. Procédé selon l'une quelconque des revendications 1 à 4, **caractérisé en ce que** les réactifs comprennent de l'acide phosphorique, de l'acide borique et du magnésium, la réaction exothermique étant selon l'équation de réaction (2)
12 H₃BO₃ + 2 H₃PO4 → B₁₂P₂O₂₃ + 21 H₂O
puis
B₁₂P₂O₂₃ + 23 Mg → B₁₂P₂ + 23 MgO (2)

6. Procédé selon l'une quelconque des revendications 1 à 4, **caractérisé en ce que** les réactifs comprennent du phosphate de bore, du magnésium et du diborure de magnésium, la réaction exothermique étant selon l'équation de réaction (1)
2 BPO₄ + 3 Mg + 5 MgB₂ → B₁₂P₂ + 8 MgO (1).

7. Procédé selon l'une quelconque des revendications 5 ou 6, **caractérisé en ce que** le magnésium est en excès dans le mélange des réactifs, par rapport à la stœchiométrie de l'équation (1) ou de l'équation (2).

8. Procédé selon l'une quelconque des revendications 6 ou 7, **caractérisé en ce que** le diborure de magnésium est en excès dans le mélange des réactifs, par rapport à la stœchiométrie de l'équation (1).

9. Procédé selon l'une quelconque des revendications 6 à 8, **caractérisé en ce que** :
- le taux de remplissage supérieur à 25%, et
- l'excès de magnésium entre 10% et 50%, avantageusement entre 20% et 25%, avantageusement avec un excès de diborure de magnésium jusqu'à 20%,
permettent d'obtenir des températures supérieures à 1500°C dans tout le mélange de réactifs lors de l'étape de réaction exothermique auto-propagée,
afin d'avoir une pureté du mélange supérieure à 80% de B₁₂P₂, avantageusement supérieure à 95% de B₁₂P₂.

10. Procédé selon l'une quelconque des revendications 1 à 9, **caractérisé en ce que** l'élément chauffant (10) est un élément résistif, tel qu'un filament de tungstène.

11. Procédé selon l'une quelconque des revendications 1 à 10, **caractérisé en ce que** le matériau isolant thermiquement et inerte chimiquement est du chlorure de sodium ou un autre sel tel que KCI, ou du MgO.

12. Procédé selon l'une quelconque des revendications 1 à 11, **caractérisé en ce que** le procédé comprend une étape de refroidissement du réacteur (R), maintenu fermé jusqu'à la fin du refroidissement.

13. Procédé selon l'une quelconque des revendications 1 à 12, **caractérisé en ce qu'**il comprend une étape d'extraction du produit de la réaction exothermique, le produit extrait du réacteur (R) étant soumis à un broyage et un lavage qui comprend une lixiviation, par exemple une lixiviation à l'eau régale.

14. Procédé selon la revendication 13, **caractérisé en ce que** la poudre issue du broyage du produit de la réaction exothermique est placée dans un bain d'acide chlorhydrique, la solution obtenue étant ensuite soumise à une filtration sous vide, par exemple avec des filtres nanométriques choisis notamment pour leur résistance aux acides, tels que les filtres en polyéthersulfone Millipore-MF^{®}.

15. Procédé selon l'une quelconque des revendications 1 à 14, **caractérisé en ce que** la réaction exothermique est effectuée sans solvant.

16. Procédé selon l'une quelconque des revendications 1 à 15, **caractérisé en ce que** le réacteur (R) présente un volume permettant de réaliser des masses de B₁₂P₂ supérieures à 50g, avantageusement supérieures à 100g, avantageusement supérieures à 500g.

17. Procédé selon l'une quelconque des revendications 1 à 16, **caractérisé en ce que** l'étape de remplissage comporte l'insertion d'une paroi intercalaire (15) maintenue dans l'espace interne du réacteur (R), le temps du remplissage par l'isolant de l'espace situé entre les parois intérieurs latérales du réacteur (R) et la paroi intercalaire (15), puis le temps du remplissage par le mélange de réactif du volume central (17) du réacteur (R) défini par l'espace intérieur du réacteur (R) entouré par la paroi intercalaire (15) jusqu'à une hauteur donnée dans le réacteur (R).

18. Sous phosphure de bore B₁₂P₂ obtenu selon le procédé défini par l'une des revendications 1 à 17, **caractérisé en ce que** le B₁₂P₂ obtenu comporte :
- des particules de B₁₂P₂ ont des tailles qui varient de 50 à 500 nm avec des formes icosaédriques arrondies,
- des particules de B₁₂P₂ de tailles microniques avec une morphologie de type « bâtonnets facettés ».

19. Mélange comprenant uniquement :
- du sous phosphure de bore B₁₂P₂ de la revendication 18, et
- du phosphure de bore BP,
avec une pureté du mélange en sous phosphure de bore B₁₂P₂ supérieure à 90%, avantageusement supérieure à 95%, avantageusement supérieure à 98%.

20. Utilisation du sous phosphure de bore B₁₂P₂ obtenu par un procédé selon l'une quelconque des revendications 1 à 17, comme matériau dur dans les outils d'usinage ou de coupe, les filières de tréfilage, les revêtements de protection contre l'usure, les outils de gros œuvre du bâtiment, des mines ou des carrières, les outils de forage, les munitions perce-blindage, les gilets pare-balles.

21. Utilisation du sous phosphure de bore B₁₂P₂ obtenu par un procédé selon l'une quelconque des revendications 1 à 17, comme matériau conducteur de chaleur ou matériau thermoélectrique.

22. Utilisation du sous phosphure de bore B₁₂P₂ obtenu par un procédé selon l'une quelconque des revendications 1 à 17, comme charge dans une résine thermodurcissable.

23. Utilisation du sous phosphure de bore B₁₂P₂ obtenu par un procédé selon l'une quelconque des revendications 1 à 17, comme matériau absorbant de neutrons.

24. Utilisation du sous phosphure de bore B₁₂P₂ obtenu par un procédé selon l'une quelconque des revendications 1 à 17, comme matériau en poudre pour la fabrication par frittage d'une céramique pour le blindage.
